# NOUVEAU FASCICULE DE BREVET EUROPEEN

(11) **EP 1 240 047 B2**
(45) Date de publication et mention de la décision concernant l'opposition: **09.04.2008**
(45) Mention de la délivrance du brevet: 21.04.2004
(21) Numéro de dépôt: 00985362.3
(22) Date de dépôt: 30.11.2000
(51) Int. Cl.: B60N 2/16

(54) **Siège réglable pour véhicule automobile**
Verstellbarer Sitz für Krafftfahrzeug
Adjustable Seat for Motor Vehicle

(30) Priorité: 03.12.1999 FR 9915245
(43) Date de publication de la demande: 18.09.2002
(73) Titulaire: RENAULT S.A.S., 92100 Boulogne Billancourt (FR)
(72) Inventeur: MARIE, Yvan, F-91580 Auvers Saint Georges (FR); PRUVOT, Hervé, F-78140 La Celle Saint Cloud (FR)
(74) Mandataire: Kohn, Philippe
(86) Numéro de dépôt international: PCT/FR2000/003340
(87) Numéro de publication internationale: WO 2001/040014

(56) Documents cités:
- EP-A- 0 857 606
- DE-A- 2 527 047
- DE-A- 4 408 219
- DE-A- 19 544 169
- DE-U- 7 140 022

## Description

L'invention concerne un siège de véhicule automobile.

On connaît de nombreux types de siège de véhicule automobile (cf. par exemple EP-A-0 857 606, correspondant au préambule de la revendication indépendante).

En général un siège de véhicule automobile est composé d'un châssis inférieur, d'un dossier et d'une assise.

Le châssis comporte deux longerons parallèles, reliés par deux traverses.

Sur chaque longeron est fixé un coulisseau qui est monté coulissant axialement dans une glissière du plancher du véhicule pour permettre le déplacement du siège d'avant en arrière.

L'assise comprend un cadre métallique d'armature qui porte un coussin d'assise.

Son cadre métallique est monté en pivotement sur deux paires de bielles de réglage situées à l'avant et à l'arrière de chaque côté du cadre métallique de façon à former avec les deux longerons un parallélogramme déformable. Ainsi, il est possible d'ajuster la position, et notamment la hauteur du siège.

De plus, l'un des axes d'articulation d'une paire de bielles peut être mobile en translation par rapport à son support, une telle configuration permet de régler l'inclinaison de l'assise du siège.

Le dossier comprend un cadre métallique d'armature qui porte un coussin de dossier.

Son cadre métallique est monté à articulation autour d'un axe horizontal porté par le cadre métallique de l'assise pour permettre le réglage du dossier en inclinaison verticale.

Le coussin d'assise et le coussin de dossier sont généralement des blocs de mousse synthétique recouverts d'un tissu.

Ce type de siège présente plusieurs inconvénients.

Un choc longitudinal tel qu'un freinage brusque ou une collision provoque des contraintes importantes dans le siège. En effet, lors d'un choc avant par exemple, le corps du passager est projeté vers l'avant, la ceinture de sécurité le retenant, notamment au niveau des hanches et des épaules, le choc provoque des efforts qui sont dirigés vers l'avant et vers le plancher du véhicule, en ce qui concerne l'assise du siège. Ainsi, la paire de bielles située à l'avant du cadre métallique de l'assise est soumise à des contraintes de compression élevées qui provoquent des déformations élastiques. Ces déformations entraînent un basculement général du siège vers l'avant et vers le bas autour d'un axe géométrique de basculement d'orientation globalement transversale.

Si la décélération est suffisamment violente, un coussin gonflable se déploie devant l'occupant du siège et, les déformations des bielles de réglage diminuent alors son efficacité.

En effet, la tête et le thorax du passager entrent en contact avec le coussin gonflable dans une position plus basse que la position de contact optimale, c'est à dire lorsqu'il n'y a pas de basculement du siège vers l'avant. La position est d'autant plus basse que la violence du choc, c'est-à-dire la décélération, est grande. Donc plus le choc est violent, plus l'efficacité du coussin gonflable peut être réduite.

De plus, après le choc, la paire de bielles avant revient quasiment dans son état initial. La déformation élastique étant globalement élastique.

La déformation des bielles de réglage, est à l'origine de l'aggravation des blessures du passager.

Pour remédier à ce problème l'invention propose un siège réglable pour véhicule automobile du type défini à la revendication 1.

D'autres caractéristiques de l'invention sont définies aux revendications secondaires.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente un siège pour véhicule automobile muni de moyens de réglage selon l'état de la technique ;
- la figure 2 est une vue schématique d'un siège similaire à celui de la figure 1 représenté en position haute ;
- la figure 3 est une vue similaire à celle de la figure 2, le siège étant représenté en position basse ;
- la figure 4 est une vue qui représente en détail les mouvements du levier de commande des moyens de réglage du siège ;
- la figure 5 est une vue schématique de la position du siège selon l'état de la technique lorsqu'il est soumis à un choc ;
- la figure 6 est une vue en perspective qui représente un siège pour véhicule automobile qui est équipé d'un dispositif d'absorption d'énergie réalisé conformément aux enseignements de l'invention ;
- la figure 7 est une vue schématique d'un siège similaire à celui de la figure précédente, le levier de commande des moyens de réglage et du dispositif d'absorption étant en position neutre ;
- la figure 8 est une vue similaire à celle de la figure précédente, le levier commande étant dans une position intermédiaire ; et
- la figure 9 est une vue schématique qui représente le dispositif d'absorption d'énergie dans une position engagée et dans une position escamotée.

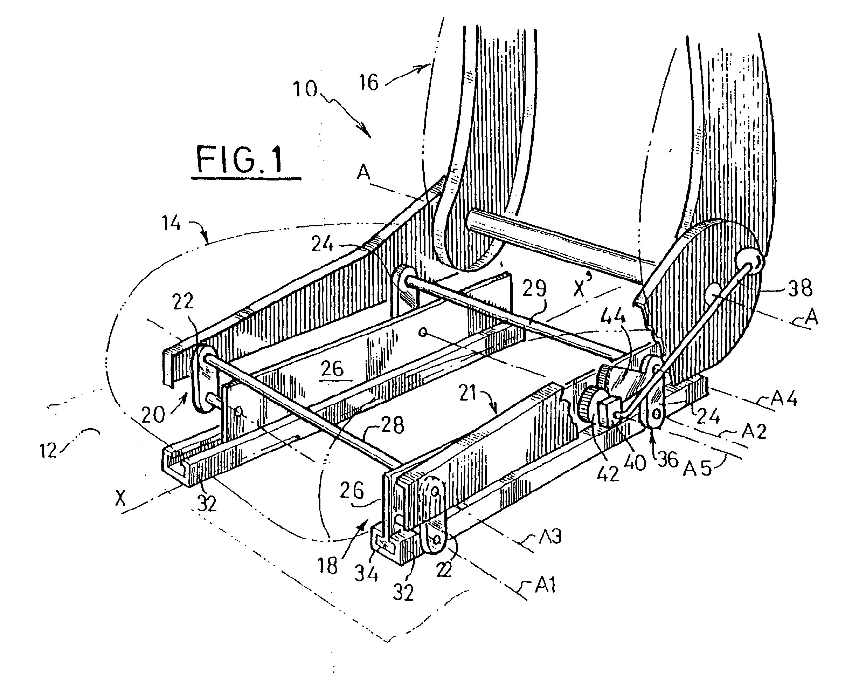

Un siège 10 selon l'état de la technique est représenté à la figure 1. Il est monté coulissant d'avant en arrière suivant un axe longitudinal de déplacement X-X' sur le plancher 12 d'un véhicule automobile.

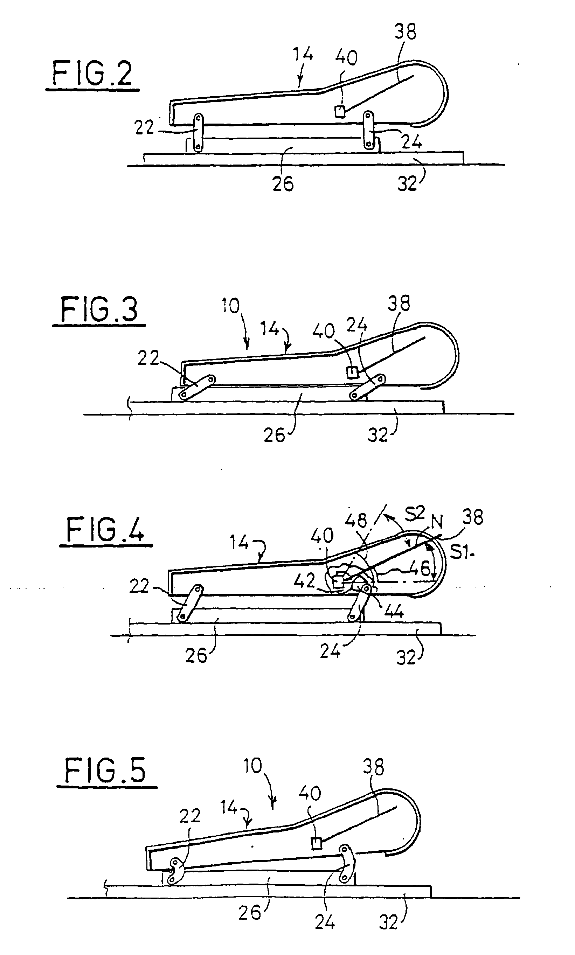

Dans la suite de la description une orientation d'avant en arrière sera utilisée, elle correspond à l'orientation de gauche à droite conformément à la figure 3 qui représente le siège 10 vu de profil.

Vis-à-vis de la figure 1, l'avant se trouve du « côté X » de l'axe de déplacement X-X', et l'arrière se trouve du « côté X' » de l'axe de déplacement X-X'.

On définit la gauche et la droite du siège 10 par rapport à l'axe de déplacement X-X', quand on est tourné vers le « côté X ».

Le siège 10 comprend un plan P de symétrie qui contient l'axe de déplacement X-X' et qui est perpendiculaire au plancher 12.

Le siège 10 comporte un élément d'assise 14 dit assise, un dossier 16, ainsi que deux éléments de structure gauche 18 et droite 20.

Le dossier 16 est monté à rotation autour d'un axe horizontal A situé à l'arrière de l'élément d'assise 14.

Les deux éléments de structure gauche 18 et droite 20 étant symétriques par rapport au plan P, on ne décrira maintenant en détail que l'élément de structure gauche 18. Les pièces qui composent chaque élément de structure 18, 20 porteront des références identiques.

L'élément de structure gauche 18 comporte un dispositif de réglage 21 de l'assise 14 du siège 10 qui est constitué notamment d'une bielle avant 22 et une bielle arrière 24 dont les extrémités inférieures sont articulées à rotation autour d'un premier A1 et d'un second A2 axes horizontaux d'articulation qui sont constitués par des pivots fixés sur un support 26 de l'élément de structure gauche 18.

Le support 26 se trouve en vis-à-vis d'une glissière 32 du plancher 12.

Le support 26 de l'élément de structure gauche 18 comporte un élément de coulissement 34 de type connu qui est monté dans la glissière 32 afin de permettre la translation et le réglage de la position longitudinal du siège 10 sur l'axe de déplacement X-X'.

L'extrémité supérieure de chacune des bielles 22 et 24 est montée articulée autour d'un axe de pivotement respectivement A3 et A4 qui sont constitués par des pivots portés par l'assise 14 du siège 10 et qui sont situés dans des plans horizontaux sensiblement perpendiculaires à l'axe X-X'.

Ainsi, les bielles avant 22 et arrière 24 forment avec le support 26 et l'assise 14 un parallélogramme déformable qui permet de régler la hauteur de l'assise 14 du siège 10 entre une position haute représentée à la figure 2, et une position basse représentée à la figure 3.

Chaque bielle 22 et 24 de l'élément de structure gauche 18 est reliée par un tube de liaison transversal avant 28 et arrière 29 aux bielles homologues de l'élément de structure droit 20. Les tubes de liaison transversaux 28 et 29 sont réalisés avec un matériau tel que de l'acier.

Les bielles 22, 24 sont mobiles entre une position sensiblement verticale et une position inclinée vers l'arrière qui correspondent à la position haute et à la position basse respectivement de l'assise de siège 10. Cet agencement est avantageux. En effet, pour un positionnement donné de l'élément 26 par rapport à la glissière 32, la position basse est celle dans laquelle le siège 10 est le plus reculé par rapport à l'avant du véhicule ce qui permet au passager de grande taille de disposer d'un maximum d'espace pour ses jambes qui sont généralement proportionnelles à sa taille.

Inversement, la position haute est celle dans laquelle le siège 10 est le plus rapproché par rapport à l'avant du véhicule. Ainsi, elle est adaptée aux passagers de plus petite taille qui utilisent cette position haute et qui, normalement, ont besoin de moins de place pour leurs jambes.

Avantageusement, des éléments d'amortissement, non représentés, sont situés au niveau des articulations des bielles avant 22 et arrière 24. Ils permettent d'absorber les vibrations de la structure du véhicule de façon à assurer au passager un confort maximum. Les éléments d'amortissement sont notamment des bagues en élastomère.

Avantageusement, l'un des pivots d'axe A1, A2, A3 ou A4 est mobile en translation par rapport à l'élément dans lequel il est fixé, de façon qu'il soit possible d'ajuster l'orientation de l'assise 14 du siège 10 par rapport au plancher 12 horizontal.

Dans une variante les bielles 22 et 24 sont remplacées par des vérins hydrauliques.

Le mouvement de basculement des bielles avant 22 et arrière 24 autour de leurs axes respectifs est obtenu par des moyens de réglage 36 qui sont agencés d'un seul côté du siège 10.

Les moyens de réglage 36 comportent notamment un levier 38 qui s'étend vers l'avant ou vers l'arrière du siège 10. Dans l'exemple présenté il s'étend vers l'arrière, son extrémité avant est reliée, par exemple par soudage ou par emboîtement serré, à un mécanisme 40 qui commande un pignon denté 42 d'axe de rotation A5 qui coopère avec un secteur denté 44.

Le secteur denté 44 est solidaire d'une bielle par exemple, de la bielle arrière 24, il est alors centré sur l'axe A4.

Conformément à la figure 1, le levier 38 est situé sur le côté gauche de l'assise 14, alors que le mécanisme 40 est supporté par le montant gauche de l'assise 14, de façon que le pignon denté 42 soit monté à l'intérieur de l'assise, c'est à dire entre les deux montants gauche et droite.

Le fonctionnement des moyens de réglage 36 est le suivant.

Lorsque le levier 38 est en position neutre N, conformément à la figure 4, le mécanisme 40 verrouille le déplacement de l'assise 14.

Pour déplacer l'assise 14 vers le haut, le passager active le levier 38 dans un premier sens S1, représenté par une flèche, à partir de la position neutre N, dans un premier secteur angulaire 46. Le mécanisme 40 est constitué d'éléments, tels que des cliquets ou des disques, du type disques d'embrayage, qui provoquent la rotation d'un angle donné du pignon denté 42 qui engrène le secteur denté 44 et provoque la rotation dans le sens anti-horaire de la bielle arrière 24 par rapport à l'axe A4. Ensuite, le levier 38 est ramené en position neutre N, l'assise 14 restant fixe pendant ce mouvement de retour. Le cas échéant, on répète plusieurs fois ce mouvement jusqu'à l'obtention du réglage voulu pour la hauteur de l'assise 14.

Pour déplacer l'assise 14 vers le bas, le passager active le levier 38 dans un second sens S2, représenté par une flèche, à partir de la position neutre N, dans un second secteur angulaire 48. Le mécanisme 40 permet alors de provoquer la rotation d'un angle donné du pignon denté 42 qui engrène le secteur 44 est provoque la rotation de la bielle arrière 24 dans le sens horaire par rapport à l'axe A4.

Dans une variante, l'actionnement du levier 38 provoque le déverrouillage du secteur denté 42, l'assise 14 descend alors sous le poids du siège et du passager. Ce mouvement est de préférence freiné par des dispositifs tels qu'un ressort de compensation.

Le mouvement de rotation de la bielle arrière 24 gauche de l'assise 14 est transmis à la bielle arrière 24 droite par le tube de liaison transversal 29 arrière. Dans une variante, non représentée, les moyens de réglage 36 comportent deux pignons dentés 42 qui sont commandés simultanément par le mécanisme 40 et qui engrènent directement chaque secteur denté 44 des deux bielles arrière 24.

Que ce soit pour le déplacement vers le haut ou vers le bas de l'assise 14, par rapport à la position neutre N, la première partie du premier 46 et du second 48 secteurs angulaires ne provoquent aucun déplacement de l'assise 14. Cette première partie est par exemple de l'ordre de 4 à 5° est appelée "course morte" du levier 38 et elle permet au mécanisme 40 de déverrouiller et de verrouiller le déplacement de l'assise 14.

Des éléments de rappel, non représentés, tels qu'un ressort ou une lame élastique, permettent de solliciter en permanence le levier 38 vers sa position neutre N. Ainsi, si le passager actionne le levier dans le premier 46 ou le second 48 secteur angulaire sans pour autant effectuer l'actionnement inverse, les éléments de rappel permettent de ramener le levier 38 en position neutre N.

Lors d'un choc avant, le dispositif de réglage est soumis à une contrainte qui provoque notamment la déformation élastique de la bielle avant 22, conformément à la figure 5, et celle des éléments d'amortissement situés au niveau des articulations de la bielle avant 22. Cela a pour conséquence un affaissement de l'assise 14 du siège 10 vers l'avant, c'est à dire un basculement global du siège 10 autour d'un axe géométrique de basculement d'orientation globalement transversale.

Pour un siège classique de véhicule automobile l'affaissement peut atteindre une valeur supérieure à 40 mm. Cette déformation ne procure pas au passager le meilleur confort, de plus elle ne permet pas aux dispositifs de sécurité tels qu'un coussin gonflable de fonctionner dans les conditions optimales décrites précédemment.

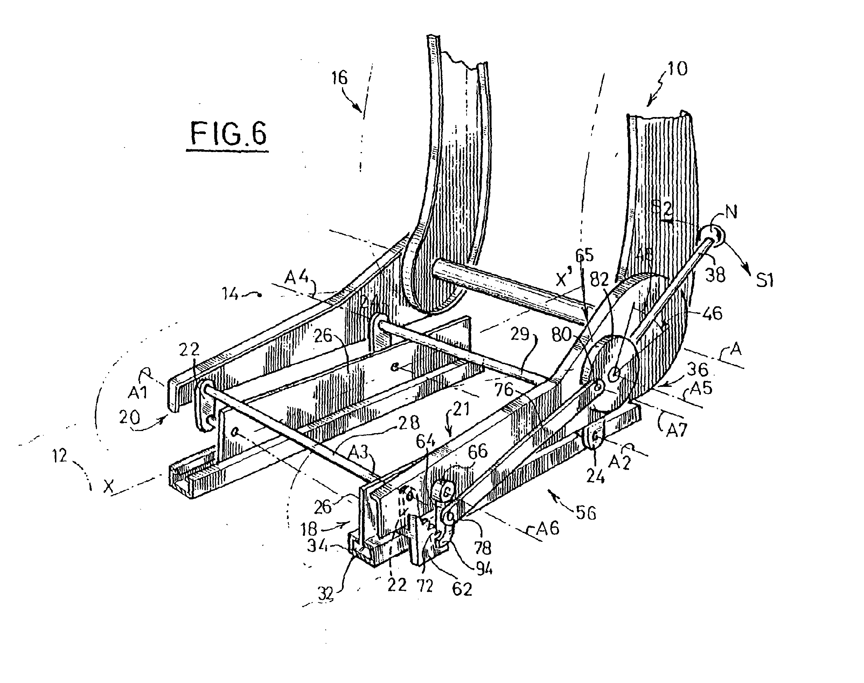

L'invention, illustrée à la figure 6, fournit une solution à ces problèmes.

Les éléments identiques ou similaires à ceux de l'état de la technique seront désignés par les mêmes références.

Selon l'invention (telle que définie dans la revendication indépendante), des moyens de renforts 56 sont fixés sur l'assise 14 du siège 10. Ils permettent de transférer une partie importante de l'énergie résultant d'un choc, et notamment d'un choc avant du véhicule automobile, du siège 10 vers la structure du véhicule. Les moyens de renforts 56 permettent ainsi de diminuer fortement, voire de supprimer, la déformation du dispositif de réglage 21, et notamment des bielles avant 22 lors du choc avant. Cela réduit le basculement du siège 10 et par conséquent le déplacement du corps du passager par rapport à la structure du véhicule. Le confort du passager est alors fortement amélioré. De plus, il est possible d'optimiser la position des organes de sécurité tels qu'un coussin gonflable par rapport à la position des membres du passager, et notamment de sa tête et de son thorax qui reste sensiblement constante quelle que soit l'intensité du choc.

Les moyens de renforts 56 sont constitués d'un élément cranté 62, tel qu'un secteur de roue à rochet qui est solidaire du support 26, et d'une jambe de renfort 64 qui est un appui sur l'élément cranté 62 et qui est reliée à l'assise 14 et à un dispositif de commande 65.

La jambe de renfort 64 est de forme sensiblement rectangulaire et elle est orientée sensiblement verticalement. Cette configuration permet à la jambe de renfort 64 de transmettre un maximum d'énergie tout en ayant une section transversale minimum, et donc de poids réduit.

La jambe de renfort 64 est montée articulée par sa première extrémité 66 supérieure autour d'un axe transversal A6 de pivotement dans l'assise 14 du siège 10, et elle est pivotante autour de cet axe transversal A6 entre une position engagée de renfort dans laquelle sa seconde extrémité 72 inférieure coopère avec l'élément cranté 62 et une position escamotée en vue de permettre le réglage de la position de l'élément d'assise 14.

Le dispositif de commande 65 est constitué d'une barre 76 de forme allongée. Il est monté pivotant par son extrémité avant 78 sur la jambe 64. Son extrémité arrière 80 est articulée autour d'un axe A7 excentré situé sur un élément circulaire 82 du mécanisme 40.

L'axe A7 est situé à l'avant de l'élément circulaire 82, dans un plan horizontal qui contient l'axe A5. Ainsi, un déplacement du levier 38 dans le premier 46 ou le second secteur angulaire 48 provoque un déplacement vers l'arrière de la barre 76, et par conséquent une rotation dans le sens anti-horaire de la jambe de renfort 64 qui quitte alors sa position engrenée.

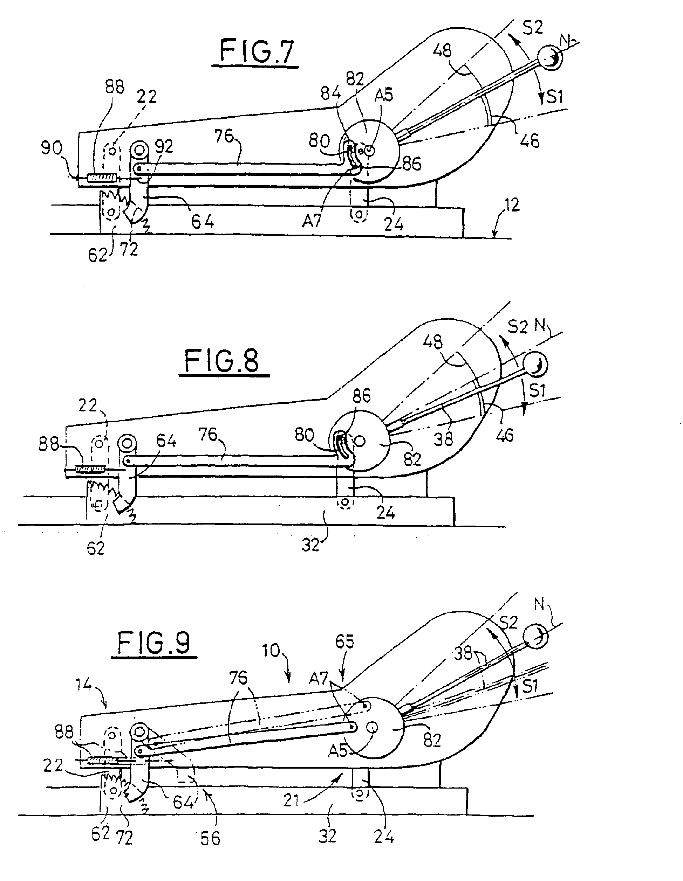

Selon une variante, représentée schématiquement à la figure 7, l'axe A7 n'est pas situé dans le plan horizontal qui contient l'axe A5. L'extrémité arrière 80 de la barre 76 du dispositif de commande 65 comporte alors une lumière 84 qui coopère avec un pion 86 fixé sur l'élément circulaire 82 qui permet la rotation de la jambe de renfort 64 dans le sens anti-horaire quel que soit le sens de déplacement du levier 38.

En effet, la figure 7 représente le levier 38 dans la position neutre N. Lorsqu'il est activé dans le premier sens S1 dans le premier secteur angulaire 46, le pion 86 se déplace dans la lumière 84 jusqu'à ce qu'il entre en contact avec son extrémité supérieure, conformément à la figure 8. La poursuite du mouvement du levier 38 entraîne alors la barre 76 vers l'arrière et provoque ainsi la rotation de la jambe de renfort 64 vers sa position escamotée.

Inversement, lorsque le levier 38 est activé dans le second sens S2 dans le second secteur angulaire 48, le pion 86 qui est en contact avec l'extrémité inférieure de la lumière 84 entraîne la barre 76 vers l'arrière et provoque la rotation de la jambe de renfort 64 vers sa position escamotée.

Conformément à la figure 9, un élément de rappel élastique 88 tel qu'un ressort de traction comporte une première extrémité avant 90 qui est fixée à l'avant de l'assise 14 du siège 10 et une seconde extrémité arrière 92 qui est reliée à proximité de la seconde extrémité 72 de la jambe de renfort 64.

L'élément de rappel élastique 88 permet d'exercer sur la jambe de renfort 64 un effort vers l'avant qui tend à maintenir la seconde extrémité 72 de la jambe de renfort 64 en contact avec l'élément cranté 62. Il permet d'une part d'assurer le retour de la jambe de renfort 64 en position engrenée et, d'autre part, d'éviter que la jambe de renfort 64 soumise à des vibrations, s'entrechoque avec l'élément cranté 62 et produise ainsi une nuisance sonore.

Le fonctionnement du dispositif de réglage 21 et des moyens de renforts 56 est le suivant.

Conformément à la figure 9, lorsque le levier 38 est en position neutre N, représenté en traits forts, la position de l'assise 14 du siège 10 est verrouillée et la jambe de renfort 64 est en position engrenée avec l'élément cranté 62. Ainsi, lorsqu'un choc et notamment un choc avant se produit, la quasi-totalité des efforts engendrés par le passager et le siège 10 sont transmis à la structure du véhicule par l'intermédiaire de la jambe de renfort 64 et de l'élément cranté 62. Les déformations du dispositif de réglage 21 sont alors très réduites.

Les efforts engendrés par le choc sont parfois très élevés. Pour éviter tout risque de glissement de la seconde extrémité inférieure 72 de la jambe de renfort 64 par rapport à l'élément cranté 62, deux flasques 94 sont rapportés de part et d'autre de la seconde extrémité 72. Les deux flasques 94 empêchent alors le mouvement de translation transversale de la seconde extrémité 72 par rapport à l'élément cranté 62.

Lors du réglage de la hauteur de l'assise 14 du siège 10, le passager actionne le levier 38 dans le premier S1 ou le second S2 sens, conformément à la figure 9, selon qu'il désire la monter ou la descendre.

Dés les premiers degrés de rotation du levier 38, le dispositif de commande 65 provoque la rotation de la jambe de renfort 64 dans le sens anti-horaire de sa position engagée, représentée en traits forts, vers sa position escamotée, représentée en traits interrompus. Ainsi, à la fin de la "course morte" du levier 38, la seconde extrémité 72 de la jambe de renfort 64 n'est plus en appuie sur l'élément cranté 62 et le dispositif de réglage 21 est déverrouillé.

La poursuite de l'actionnement du levier 38 provoque alors la montée ou la descente de l'assise 14.

Lorsque le levier 38 revient vers sa position neutre N, le mécanisme 40 verrouille le déplacement de l'assise 14 puis au cours de la "course morte", la jambe de renfort 64 reprend sa position engagée.

Ainsi, l'utilisation des moyens de renfort 56 est "transparente" pour l'utilisateur. À chaque fois que le levier 38 est actionné sur un secteur angulaire supérieur à sa "course morte", le mécanisme 40 déverrouille le déplacement de l'assise 14 après que la jambe de renfort 64 ait quitté sa position engagée.

L'invention permet d'améliorer le confort des passagers et d'optimiser leur sécurité en cas de choc. De plus, les bielles avant 22 et arrière 24 ayant pour unique fonction le réglage de l'assise du siège 24, et non plus le soutien de cette dernière lors d'un choc, leur dimension peut être fortement réduite.

La description qui précède n'est pas limitative de l'invention. En effet, les moyens de renforts 56 peuvent être symétriques par rapport au plan P. Ils comportent alors deux jambes de renfort 64 qui sont situées de part et d'autre de l'assise 14 du siège 10 et qui sont commandées simultanément. De plus, les moyens de réglage 36 peuvent consister, par exemple, en une commande à mollette dont le déplacement transversal permet d'une part le verrouillage et le déverrouillage du déplacement de l'assise 14, et d'autre part, le passage de la jambe de renfort 64 de sa position engagée à sa position escamotée, et dont la rotation permet le réglage de la hauteur de l'assise 14.

## Revendications

1. Siège réglable (10) pour véhicule automobile du type qui comporte un élément d'assise (14) sensiblement horizontal sur la partie arrière de laquelle est articulé un dossier (16), un dispositif de réglage (21) de la position de l'élément d'assise (14) du siège (10) par rapport à la structure du véhicule, qui comporte des moyens de verrouillage et de déverrouillage du dispositif de réglage (21), et des moyens de renfort (56), distincts du dispositif de réglage (21), qui encaissent au moins une partie des efforts de collision provoqués par un choc longitudinal, notamment à l'avant du véhicule de façon, lors du choc, à diminuer la déformation du dispositif de réglage (21) et donc à diminuer le mouvement de basculement, notamment vers l'avant, du siège réglable (10) autour d'un axe géométrique de basculement d'orientation globalement transversale,
**caractérisé en ce que** les moyens de renfort (56) comportent au moins une jambe de renfort (64) qui est montée en rotation par sa première extrémité (66) autour d'un axe transversal (A6) de pivotement dans l'assise (14) du siège (10) et qui est pivotante autour de cet axe transversal (A6) entre une position engagée de renfort dans laquelle sa seconde extrémité (72) coopère avec la structure du véhicule et une position escamotée en vue de permettre le réglage de la position de l'élément d'assise (14),
et **en ce que** la jambe de renfort (64) est reliée à un dispositif de commande (65) du pivotement de la jambe de renfort (64) entre ses positions engagée et escamotée.

2. Siège réglable (10) selon la revendication précédente, **caractérisé en ce que** la seconde extrémité (72) de la jambe de renfort (64) coopère avec un élément cranté (62) solidaire de la structure du véhicule pour définir la position engagée.

3. Siège réglable (10) selon l'une des revendications 1 ou 2, **caractérisé en ce que** la jambe de renfort (64) est rappelée élastiquement en position engagée.

4. Siège réglable (10) selon l'une quelconque des revendications précédentes, **caractérisé en ce que** le dispositif de commande (65) comporte une barre (76) reliée à la jambe de renfort (64) dans une zone située entre l'axe de pivotement (A6) et la seconde extrémité (72), et **en ce que** le déplacement de la barre (76) permet le pivotement de la jambe de renfort (64) autour de l'axe de pivotement (A6), entre sa position engagée et sa position escamotée.

5. Siège réglable (10) selon l'une quelconque des revendications précédentes, **caractérisé en ce que** le dispositif de commande (65) est actionné par les moyens de verrouillage et de déverrouillage du dispositif de réglage (21).

6. Siège réglable (10) selon la revendication précédente, **caractérisé en ce que** lors du déverrouillage du dispositif de réglage (21), la jambe de renfort (64) est en position escamotée avant que le dispositif de réglage (21) ne soit déverrouillé.

7. Siège réglable (10) selon l'une quelconque des revendications précédentes, **caractérisé en ce que** le dispositif de réglage (21) de la position de l'élément d'assise (14) du siège (10) comprend deux bielles avant (22) et deux bielles arrière (24).

8. Siège réglable (10) selon l'une quelconque des revendications précédentes, **caractérisé en ce que** l'axe de pivotement de l'extrémité supérieure (72) de jambe de renfort (64) est monté dans la partie avant de l'assise (14) du siège (10).

9. Siège réglable selon l'une quelconque des revendications précédentes, **caractérisé en ce que** la jambe de renfort est articulée sur un élément latéral de l'assise du siège du véhicule.

10. Siège réglable (10) selon l'une quelconque des revendications précédentes, **caractérisé en ce que** les moyens de renfort (56) sont symétriques et **en ce qu'**ils comportent deux jambes de renfort (64) qui sont commandées simultanément.

## Claims

1. Adjustable seat (10) for a motor vehicle of the type comprising an approximately horizontal base (14) on the back part of which a backrest (16) is hinged, a device (21) for adjusting the position of the base (14) of the seat (10) in relation to the vehicle's structure, and comprising means for locking and unlocking the adjustment device (21), and reinforcement means (56), distinct from the adjustment device (21), which absorb at least a part of the collision stresses caused by a longitudinal impact, in particular at the front of the vehicle in such a way that the deformation of the adjustment device (21) on impact is reduced and thus the tilting movement, in particular forwards, of the adjustable seat (10) around a geometrical tilting axis with globally transverse orientation, is reduced.
**characterized in that** the reinforcement means (56) comprise at least one reinforcement strut (64) that is mounted rotatably by its first end (66) around a transverse pivot axis (A6) in the base (14) of the seat (10) and pivots around this transverse axis (A6) between an engaged reinforcement position in which its second end (72) cooperates with the vehicle's structure, and a retracted position with a view to allowing the adjustment of the position of the base (14)
and **in that** the reinforcement strut (64) is connected to a device (65) for controlling the pivoting of the reinforcement strut (64) between its engaged and retracted positions.

2. Adjustable seat (10) according to the previous claim, **characterized in that** the second end (72) of the reinforcement strut (64) cooperates with a toothed component (62) integral to the vehicle's structure to define the engaged position.

3. Adjustable seat (10) according to anyone of claims 1 or 2, **characterized in that** the reinforcement strut (64) is returned elastically to the engaged position.

4. Adjustable seat (10) according anyone of the preceding claims, **characterized in that** the control device (65) comprises a bar (76) connected to the reinforcement strut (64) in a zone situated between the pivot axis (A6) and the second end (72), and **in that** the movement of the bar (76) allows the reinforcement strut (64) to pivot around the pivot axis (A6), between its engaged position and its retracted position.

5. Adjustable seat (10) according to anyone of the preceding claims, **characterized in that** the control device (65) is activated by the adjustment device (21) locking and unlocking means.

6. Adjustable seat (10) according to the previous claim, **characterized in that** during the unlocking of the adjustment device (21), the reinforcement strut (64) is in the retracted position before the adjustment device (21) is unlocked.

7. Adjustable seat (10) according to anyone of the previous claims, **characterized in that** the device (21) for adjusting the position of the base (14) of the seat (10) comprises two front rods (22) and two back rods (24).

8. Adjustable seat according to anyone of the preceiding claims, **characterized in that** the pivot axis of the upper end (72) of the reinforcement strut (64) is mounted in the front part of the base (14) of the seat (10).

9. Adjustable seat according to anyone of claims 2 to 10, **characterized in that** the reinforcement strut is hinged on a side part of the base of the seat of the vehicle.

10. Adjustable seat (10) according to anyone of claims 2 to 11, **characterized in that** the reinforcement means (56) are symmetrical and **in that** they comprise two reinforcement struts (64) that are controlled simultaneously.

## Patentansprüche

1. Verstellbarer Sitz (10) für ein Kraftfahrzeug, vom Typ, der ein fast horizontales Sitzelement (14), auf dessen hinterem Teil eine Sitzlehne (16) angebracht ist, eine Verstellvorrichtung (21) der Position des Sitzflächenelements (14) des Sitzes (10) im Verhältnis zu der Struktur des Fahrzeugs, die Mittel zur Verriegelung und Entriegelung der Verstellvorrichtung (21), und Verstärkungsmittel (56) aufweist, verschieden von der Verstellvorrichtung (21), die mindestens einen Teil der Beanspruchung durch Kollision verkraften, die durch einen längsgerichteten Zusammenstoß bewirkt wird, insbesondere im vorderen Teil des Fahrzeugs, um, bei dem Zusammenstoß, die Verformung der Verstellvorrichtung (21) zu vermindern und daher die Umklappbewegung, insbesondere zum vorderen Teil hin, des verstellbaren Sitzes (10) um eine geometrische Umklapp-Achse von insgesamt quer verlaufender Ausrichtung zu vermindern.
**dadurch gekennzeichnet, dass** die Verstärkungsmittel (56) mindestens eine Verstärkungsstrebe (64) umfassen, die in Drehung über ihr erstes Ende (66) um eine querliegende Drehachse (A6) in der Sitzfläche (14) des Sitzes (10) montiert ist und die drehbar um diese querliegende Achse (A6) ist, zwischen einer eingerasteten Verstärkungsposition, in welcher deren zweites Ende (72) mit der Struktur des Fahrzeugs zusammenwirkt, und einer zurückgezogenen Position, im Hinblick auf die Regelung der Position des Sitzflächenelements,
und dadurch, dass die Verstärkungsstrebe (64) mit einer Vorrichtung (65) zum Steuern der Drehung der Verstärkungsstrebe (64) zwischen ihrer eingerasteten und ihrer zurückgezogenen Position verbunden ist.

2. Verstellbarer Sitz (10) gemäß dem vorhergehenden Anspruch, **dadurch gekennzeichnet, dass** das zweite Ende (72) der Verstärkungsstrebe (64) mit einem formgezahnten Element (62) zusammenwirkt, das mit der Struktur des Fahrzeugs verbunden ist, um die eingerastete Position zu definieren.

3. Verstellbarer Sitz (10) gemäß einem der Ansprüche 1 oder 2, **dadurch gekennzeichnet, dass** die Verstärkungsstrebe (64) elastisch in die eingerastete Position zurückgezogen wird.

4. Verstellbarer Sitz (10) gemäß irgendeinem der vorhergehenden Ansprüche, **dadurch gekennzeichnet, dass** die Steuervorrichtung (65) eine Stange (76) aufweist, die mit der Verstärkungsstrebe (64) verbunden ist in einer Zone zwischen der Drehachse (A6) und dem zweiten Ende (72), und dadurch, dass die Verschiebung der Stange (76) die Drehung der Verstärkungsstrebe (64) um die Drehachse (A6) ermöglicht, zwischen ihrer eingerasteten Position und ihrer zurückgezogenen Position.

5. Verstellbarer Sitz (10) gemäß irgendeinem der vorhergehenden Ansprüche, **dadurch gekennzeichnet, dass** die Steuervorrichtung (65) durch Ver- und Entriegelungsmittel der Regelungsvorrichtung (21) betätigt wird.

6. Verstellbarer Sitz (10) gemäß dem vorhergehenden Anspruch, **dadurch gekennzeichnet, dass** bei Verriegelung der Regelungsvorrichtung (21) die Verstärkungsstrebe (64) in zurückgezogener Position ist, bevor die Regelungsvorrichtung (21) nicht entriegelt ist.

7. Verstellbarer Sitz (10) gemäß irgendeinem der vorhergehenden Ansprüche, **dadurch gekennzeichnet, dass** die Vorrichtung (21) zur Regelung des Sitzelements (14) des Sitzes (10) vorne zwei Pleuelstangen (22) und hinten zwei Pleuelstangen (24) umfasst.

8. Verstellbarer Sitz (10) gemäß irgendeinem der vorhergehenden Ansprüche, **dadurch gekennzeichnet, dass** die Drehachse des oberen Endes (72) der Verstärkungsstrebe (64) in dem Bereich vor der Sitzfläche (14) des Sitzes (10) montiert ist.

9. Verstellbarer Sitz gemäß irgendeinem der vorhergehenden Ansprüche, **dadurch gekennzeichnet, dass** die Verstärkungsstrebe auf einem seitlichen Element der Sitzfläche des Sitzes des Fahrzeugs ausgebildet ist.

10. Verstellbarer Sitz (10) gemäß irgendeinem der vorhergehenden Ansprüche, **dadurch gekennzeichnet, dass** die Verstärkungsmittel (56) symmetrisch sind und dadurch, dass sie zwei Verstärkungsstreben (64) aufweisen, die gleichzeitig verstellt werden.
